(19) Europäisches Patentamt
European Patent Office
Office européen des brevets

(11) **EP 2 779 500 A1**

(12) **EUROPEAN PATENT APPLICATION**
published in accordance with Art. 153(4) EPC

(43) Date of publication:
**17.09.2014 Bulletin 2014/38**

(51) Int Cl.:
***H04L 1/00*** (2006.01)

(21) Application number: **12847178.6**

(22) Date of filing: **29.06.2012**

(86) International application number:
**PCT/CN2012/077833**

(87) International publication number:
**WO 2013/067819 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2011 CN 201110355806**

(71) Applicant: **China Academy of Telecommunications Technology Haidian District Beijing 100191 (CN)**

(72) Inventors:
• **ZHANG, Ranran Beijing 100191 (CN)**
• **SU, Xin Beijing 100191 (CN)**
• **TAMRAKAR, Rakesh Beijing 100191 (CN)**
• **JING, Meifang Beijing 100191 (CN)**

(74) Representative: **Nony 3, rue de Penthièvre 75008 Paris (FR)**

(54) **PRECODING MATRIX INDICATOR (PMI) INFORMATION TRANSMISSION METHOD AND DEVICE**

(57) Disclosed are a precoding matrix indicator (PMI) information transmission method and device, for realizing the feedback and receiving of PMIs. The PMI information feedback method provided in the present application server includes: UE determining the feedback of a PMI and a feedback mode used for feeding back the PMI; the UE determining a rank indicator (RI) and a pre-coding matrix in a compressed precoding matrix set and determining an RI and first PMI combined coding information value according to a preset RI and first PMI combined coding information value and a correlation list of RIs and codebook indices; and the UE employing the feedback mode to send the determined RI and first PMI combined coding information value to a base station.

A User Equipment (UE) determines a need to feed back a PMI and a feedback mode for feeding back the PMI — S101

The UE determines a data layer Rank Indication (RI) and a precoding matrix in a set of compressed precoding matrixes and determines a jointly encoded information value of the RI and a first PMI according to a preset correspondence relationship between the jointly encoded information value of the RI and the first PMI, the RI and a codebook index — S102

The UE sends the determined jointly encoded information value of the RI and the first PMI to a base station in the feedback mode — S103

Fig.10

## Description

This application claims the benefit of Chinese Patent Application No. 201110355806.9, filed with the Chinese Patent Office on November 10, 2011 and entitled "Method and apparatus for transmitting Precoding Matrix Indicator (PMI) information", which is hereby incorporated by reference in its entirety.

## Field of the Invention

The present invention relates to the field of communications and particularly to a method and apparatus for transmitting Precoding Matrix Indicator (PMI) information.

## Background of the Invention

In a Multiple-Input Multiple-Output (MIMO) system, if a transmitter can know channel information somehow, then it can optimize a signal transmission dependent upon a channel characteristic to thereby improve the quality of reception and lower a requirement on the complexity of a receiver. In the real system, the channel information is typically fed back in quantized channel information to lower a feedback overhead and to improve the transmission efficiency of the system.

In a Long Time Evolved (LTE) system, codebook based implicit Channel State Information (CSI) feedback is introduced. A User Equipment (UE) which is a terminal device measures a downlink channel based upon a pilot and reports information about a Rank Indication (RI) and a Precoding Matrix Indicator (PMI) supportable in the downlink to a base station dependent upon a reception processing algorithm of the UE, and in the meantime the UE also needs to report a Channel Quality Indicator (CQI) of each codeword, where the UE calculates the CQI assuming that the base station has adopted the RI/PMI recommended by the UE.

In a Long Time Evolved Advanced (LTE-A) system, codebook based implicit CSI feedback is introduced again. In order to improve the precision at which a PMI is fed back, in the LTE-A, two matrixes (W1 and W2) are combined into a precoding matrix (W), where W1 and W2 are indicated respectively by two PMIs (which are a first PMI value corresponding to W1 and a second PMI value corresponding to W2).

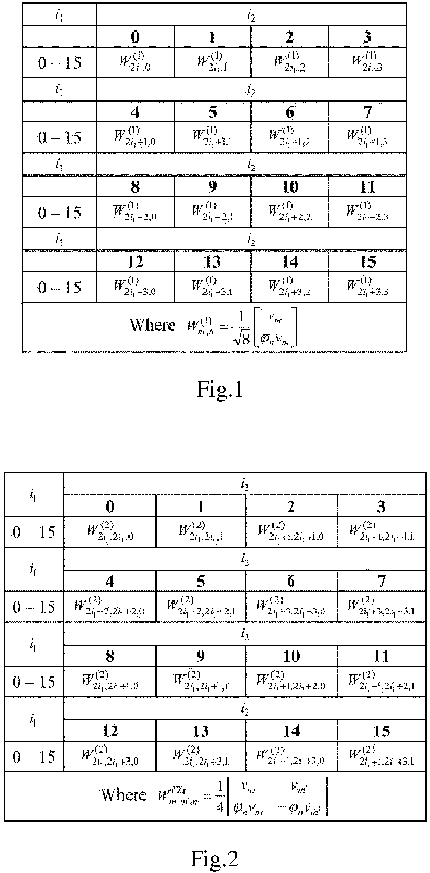

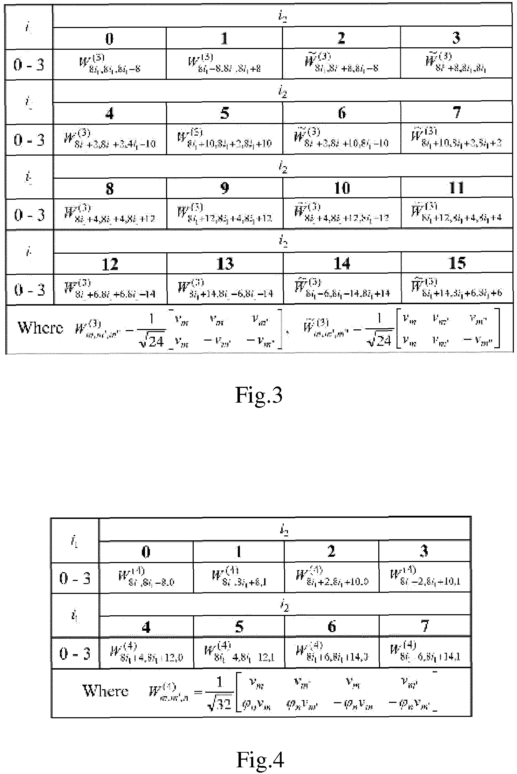

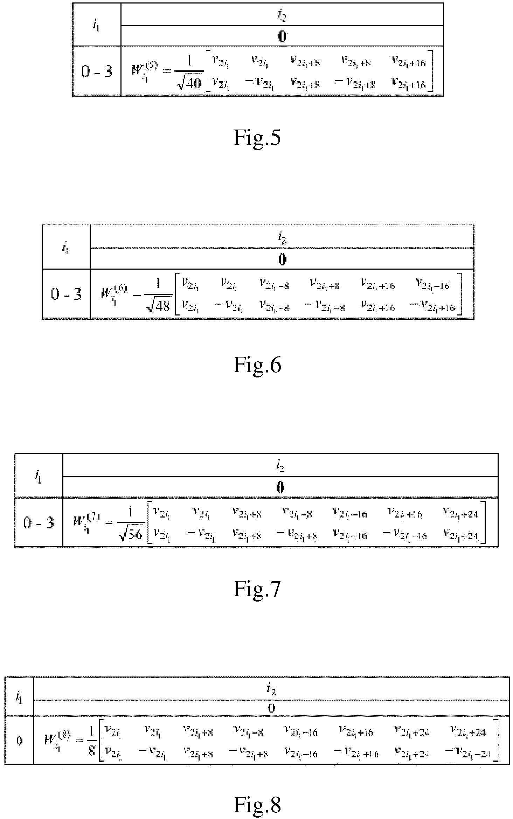

Particularly codebooks in the LTE R8/9 release continue their use with 2 antenna ports and 4 antenna ports, where W1 is defined as an identity matrix, and the first PMI value includes 0-bit information and thus does not need to be fed back. Specifically a correspondence relationship between precoding matrix indicator information and codebook indexes in an 8-antenna port codebook in the LTE-A system is as illustrated in Fig.1 to Fig.8.

Fig.1 is a codebook for 1-layer Channel State Information (CSI) reporting using 8 antenna ports which are antenna ports 15 to 22, that is, an 8-antenna port rank-1 codebook in the LTE-A system.

Fig.2 is a codebook for 2-layer Channel State Information (CSI) reporting using 8 antenna ports which are antenna ports 15 to 22, that is, an 8-antenna port rank-2 codebook in the LTE-A system.

Fig.3 is a codebook for 3-layer Channel State Information (CSI) reporting using 8 antenna ports which are antenna ports 15 to 22, that is, an 8-antenna port rank-3 codebook in the LTE-A system.

Fig.4 is a codebook for 4-layer Channel State Information (CSI) reporting using 8 antenna ports which are antenna ports 15 to 22, that is, an 8-antenna port rank-4 codebook in the LTE-A system.

Fig.5 is a codebook for 5-layer Channel State Information (CSI) reporting using 8 antenna ports which are antenna ports 15 to 22, that is, an 8-antenna port rank-5 codebook in the LTE-A system.

Fig.6 is a codebook for 6-layer Channel State Information (CSI) reporting using 8 antenna ports which are antenna ports 15 to 22, that is, an 8-antenna port rank-6 codebook in the LTE-A system.

Fig.7 is a Codebook for 7-layer Channel State Information (CSI) reporting using 8 antenna ports which are antenna ports 15 to 22, that is, an 8-antenna port rank-7 codebook in the LTE-A system.

Fig.8 is a codebook for 8-layer Channel State Information (CSI) reporting using 8 antenna ports which are antenna ports 15 to 22, that is, an 8-antenna port rank-8 codebook in the LTE-A system.

Where $\varphi_n = e^{j\pi n/2}$ , $v_m = [1\ e^{j2\pi m/32}\ e^{j4\pi m/32}\ e^{j6\pi m/32}]^T$ , and $(\cdot)^T$ represents transposition of a matrix.

An 8-antenna port PMI without any codebook compression is defined in the existing LTE-A standard as follows:

For 8-antenna Channel State Information-Reference Signal (CSI-RS) ports {15,16,17,18,19,20,21,22} , the value of the first PMI is $n_1 \in \{0,1,L , f(\upsilon) -1\}$, and the value of the second PMI is $n_2 \in \{0,1,L, g(\upsilon) - 1\}$, and in correspondence to the table illustrated in any of Fig.1 to Fig.8, for example, Table j, there are codebook indexes $n_1$ and $n_2$ in Table j, where $\upsilon$ is equal to the RI value, $j = \upsilon$, $f(\upsilon) = \{16,16,4,4,4,4,4,1\}$, and $g(\upsilon) = \{16,16,16,8,1,1,1,1\}$

In the LTE-A system, the Physical Uplink Control Channel (PUCCH) report mode 1-1 with 8 antenna ports is supported to feed back the RI, the wideband PMI and the wideband CQI. At present there are two PUCCH report mode 1-1, which are referred to as the submode 1 and the submode 2 respectively. In the submode 1, the RI and the first PMI are reported in a subframe, and the wideband second PMI and the wideband CQI are reported in the same subframe.

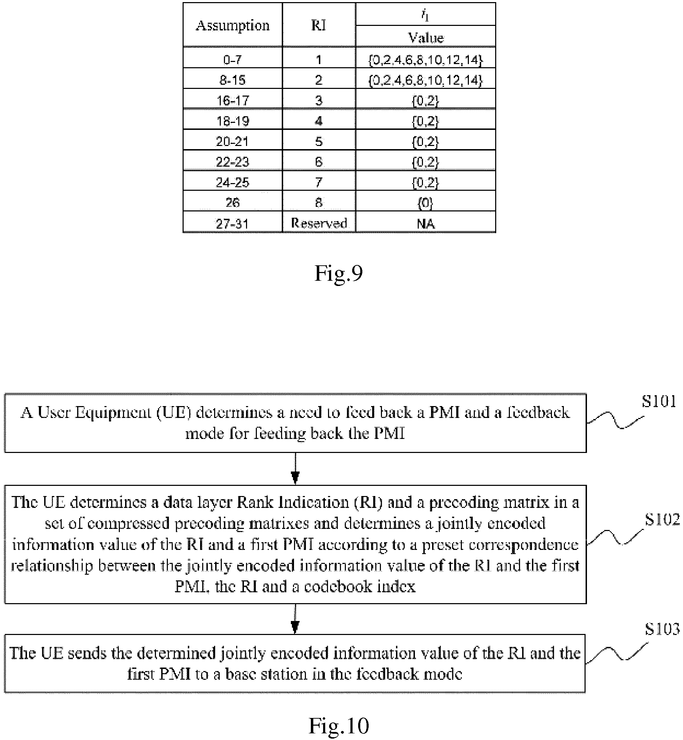

In order to lower the number of information bits of the RI and the first PMI to thereby improve the reliability of PUCCH transmission, information about the first PMI value is compressed in the LTE-A standard, and the RI and the first PMI value are encoded jointly, as illustrated in Fig.9.

However no correspondence relationship between the encoded value of the RI and the first PMI and the particular codebook index $i_1$ can be derived from the table of the correspondence relationship illustrated in Fig.9 and consequently no PMI can be fed back.

In summary, in the existing LTE-A standard, no particular correspondence relationship between the jointly encoded value of the RI and the first PMI for joint reporting of the RI and the first PMI, and the codebook index $i_1$, in the submode 1 of the PUCCH feedback mode 1-1 can be derived and consequently no PMI can be fed back.

## Summary of the Invention

Embodiments of the invention provide a method and apparatus for transmitting Precoding Matrix Indicator (PMI) information so as to feed back and receive a PMI.

An embodiment of the invention provides a method of feeding back PMI information, the method including:

a User Equipment (UE) determining a need to feed back a PMI and a feedback mode for feeding back the PMI;

the UE determining a Rank Indication (RI) and a precoding matrix in a set of compressed precoding matrixes and determining a jointly encoded information value of the RI and a first PMI according to a preset correspondence relationship between the jointly encoded information value of the RI and the first PMI, the RI and a codebook index; and

the UE sending the determined jointly encoded information value of the RI and the first PMI to a base station in the feedback mode.

An embodiment of the invention provides a method of receiving PMI information, the method including:

a base station notifying a User Equipment (UE) of a need to feed back a PMI and a feedback mode for feeding back the PMI;

the base station receiving a jointly encoded information value of a Rank Indication (RI) and a first PMI fed back from the UE; and

the base station determining the RI and a codebook index, based on the jointly encoded information value of the RI and the first PMI, according to a preset correspondence relationship between the jointly encoded information value of the RI and the first PMI, the RI and the codebook index.

An embodiment of the invention provides an apparatus for feeding back PMI information, the apparatus including:

a first determination unit configured to determine a need to feed back a PMI and a feedback mode for feeding back the PMI;

a second determination unit configured to determine a Rank Indication (RI) and a precoding matrix in a set of compressed precoding matrixes and to determine a jointly encoded information value of the RI and a first PMI according to a preset correspondence relationship between the jointly encoded information value of the RI and the first PMI, the RI and a codebook index; and

a sending unit configured to send the determined jointly encoded information value of the RI and the first PMI to a base station in the feedback mode.

An embodiment of the invention provides an apparatus for receiving PMI information, the apparatus including:

a notification unit configured to notify a User Equipment (UE) of a need to feed back a PMI and a feedback mode for feeding back the PMI;
a reception unit configured to receive a jointly encoded information value of a Rank Indication (RI) and a first PMI fed back from the UE; and
a determination unit configured to determine the RI and a codebook index, based on the jointly encoded information value of the RI and the first PMI, according to a preset correspondence relationship between the jointly encoded information value of the RI and the first PMI, the RI and the codebook index.

In the embodiments of the invention, a User Equipment (UE) determines a need to feed back a PMI and a feedback mode for feeding back the PMI; the UE determines a Rank Indication (RI) and a precoding matrix in a set of compressed precoding matrixes and determines a jointly encoded information value of the RI and a first PMI according to a preset correspondence relationship between the jointly encoded information value of the RI and the first PMI, the RI and a codebook index; and the UE sends the determined jointly encoded information value of the RI and the first PMI to a base station in the feedback mode to thereby feed back the PMI.

In the embodiments of the invention, a base station notifies a User Equipment (UE) of a need to feed back a PMI and a feedback mode for feeding back the PMI; the base station receives a jointly encoded information value of a Rank Indication (RI) and a first PMI fed back from the UE; and the base station determines the RI and a codebook index, based on the jointly encoded information value of the RI and the first PMI, according to a preset correspondence relationship between the jointly encoded information value of the RI and the first PMI, the RI and the codebook index to thereby receive the PMI.

**Brief Description of the Drawings**

Fig.1 to Fig.8 are schematic diagrams of a correspondence relationship between precoding matrix indicator information and codebook indexes in 8-antenna port codebooks in the LTE-A system;

Fig.9 is a schematic diagram of a correspondence relationship between an encoded information value of an RI and a first PMI, the RI and a codebook index $i_1$ in the prior art;

Fig.10 is a schematic flow chart of a method of feeding back Precoding Matrix Indicator (PMI) information according to an embodiment of the invention;

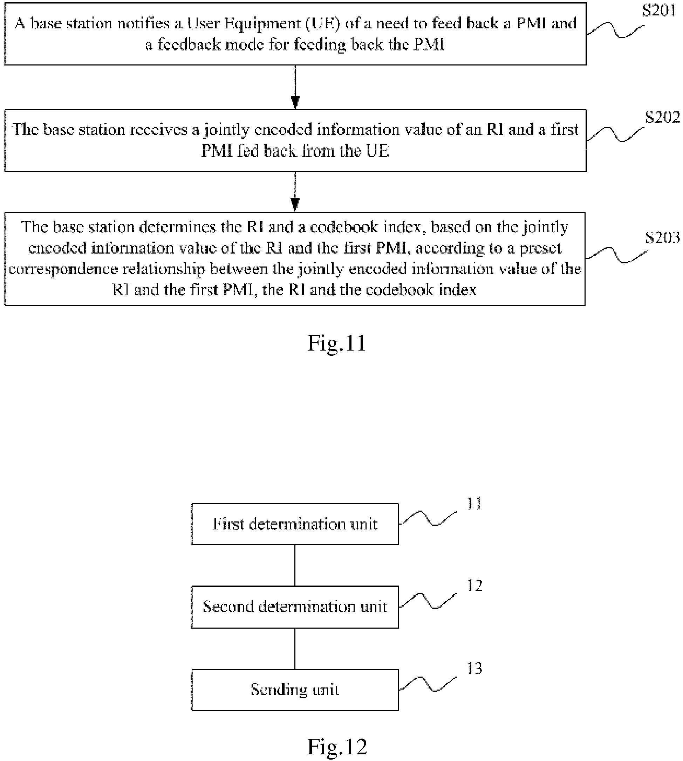

Fig.11 is a schematic flow chart of a method of receiving Precoding Matrix Indicator (PMI) information according to an embodiment of the invention;

Fig.12 is a schematic structural diagram of an apparatus for feeding back Precoding Matrix Indicator (PMI) information according to an embodiment of the invention; and

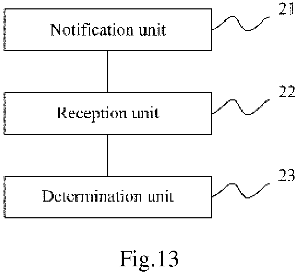

Fig.13 is a schematic structural diagram of an apparatus for receiving Precoding Matrix Indicator (PMI) information according to an embodiment of the invention.

**Detailed Description of the Embodiments**

Embodiments of the invention provide a method and apparatus for transmitting Precoding Matrix Indicator (PMI) information so as to feed back and receive a PMI.

In the embodiments of the invention, a PMI is fed back and received by presetting the same correspondence between a codebook-compressed PMI value and a codebook index relationship at the network side and the terminal side.

Referring to Fig.10, a method of feeding back PMI information according to an embodiment of the invention includes the following steps:

S101. A UE determines a need to feed back a PMI and a feedback mode for feeding back the PMI;
S102. The UE determines an RI and a precoding matrix in a set of compressed precoding matrixes and determines a jointly encoded information value of the RI and a first PMI according to a preset correspondence relationship between the jointly encoded information value of the RI and the first PMI, the RI and a codebook index $i_1$; and
S103. The UE sends the determined jointly encoded information value of the RI and the first PMI to a base station in the determined feedback mode.

Preferably the UE determines the need to feed back the PMI and the feedback mode for feeding back the PMI as follows:
The UE receives control signaling, sent from the base station, including information indicating a need to feed back Channel State Information (CSI) and a feedback mode for feeding back the CSI, and determines from the control signaling the need to feed back the PMI and the use of the feedback mode for feeding back the PMI.

Preferably the correspondence relationship in the step S102 includes:

For RI=1, the jointly encoded information value $I_{RI/PMI1}$ of the RI and the first PMI ranges from 0 to 7, and the codebook index $i_1$ and $I_{RI/PMI1}$ satisfy $i_1 = 2I_{RI/PMI1}$;

For RI=2, the jointly encoded information value $I_{RI/PMI1}$ of the RI and the first PMI ranges from 8 to 15, and the codebook index $i_1$ and $I_{RI/PMI1}$ satisfy $i_1 = 2(I_{RI/PMI1}-8)$;

For RI=3, the jointly encoded information value $I_{RI/PMI1}$ of the RI and the first PMI ranges from 16 to 17, and the codebook index $i_1$ and $I_{RI/PMI1}$ satisfy $i_1 = 2(I_{RI/PMI1}-16)$;

For RI=4, the jointly encoded information value $I_{RI/PMI1}$ of the RI and the first PMI ranges from 18 to 19, and the codebook index $i_1$ and $I_{RI/PMI1}$ satisfy $i_1 = 2(I_{RI/PMI1}-18)$;

For RI=5, the jointly encoded information value $I_{RI/PMI1}$ of the RI and the first PMI ranges from 20 to 21, and the codebook index $i_1$ and $I_{RI/PMI1}$ satisfy $i_1 = 2(I_{RI/PMI1}-20)$;

For RI=6, the jointly encoded information value $I_{RI/PMI1}$ of the RI and the first PMI ranges from 22 to 23, and the codebook index $i_1$ and $I_{RI/PMI1}$ satisfy $i_1 = 2(I_{RI/PMI1}-22)$;

For RI=7, the jointly encoded information value $I_{RI/PMI1}$ of the RI and the first PMI ranges from 24 to 25, and the codebook index $i_1$ and $I_{RI/PMI1}$ satisfy $i1 = 2(I_{RI/PMI1}-24)$; and

For RI=8, the jointly encoded information value $I_{RI/PMI1}$ of the RI and the first PMI is 26, and the codebook index $i_1$ is 0.

Preferably the correspondence relationship is a correspondence relationship as depicted in Table 1 below:

Table 1

| $I_{RI/PMI1}$ | RI | $i_1$ |
|---|---|---|
| 0-7 | 1 | $2I_{RI/PMI1}$ |
| 8-15 | 2 | $2(I_{RI/PMI1}-8)$ |
| 16-17 | 3 | $2(I_{RI/PMI1}-16)$ |
| 18-19 | 4 | $2(I_{RI/PMI1}-18)$ |
| 20-21 | 5 | $2(I_{RI/PMI1}-20)$ |
| 22-23 | 6 | $2(I_{RI/PMI1}-22)$ |
| 24-25 | 7 | $2(I_{RI/PMI1}-24)$ |
| 26 | 8 | 0 |
| 27-31 | Reserved | NA |

Where $I_{RI/PMI1}$ is the jointly encoded information value of the RI and the first PMI, $i_1$ is the codebook index, and NA represents no significance.

Specifically, for example:

The UE receives the control signaling, sent from the base station, including the information indicating the need to feed back the CSI and the feedback mode for feeding back the CSI and thereby determines the need to feed back the PMI and the use of the submode 1 of the PUCCH feedback mode 1-1 as the feedback mode for feeding back the PMI.

The UE determines the RI and the precoding matrix in the set of compressed precoding matrixes corresponding to the submode 1 of the PUCCH feedback mode 1-1 and determines the jointly encoded information value of the RI and the first PMI according to the table of the preset correspondence relationship between the jointly encoded information value of the RI and the first PMI, the RI and the codebook index $i_1$.

For example, if the determined RI value is 2, and the codebook index $i_1$ corresponding to the determined precoding matrix is 4, then the jointly encoded information value $I_{RI/PMI1}$ of the RI and the first PMI ranges from 8 to 15 from Table 1, and thereby the value of $I_{RI/PMI1}$ is 10 in $i_1 = 2(I_{RI/PMI1}-8)$.

Finally the UE sends the determined jointly encoded information value of the RI and the first PMI, i.e., $I_{RI/PMI1} = 10$, to the base station in the feedback mode.

Referring to Fig.11, a method of receiving Precoding Matrix Indicator (PMI) information according to an embodiment of the invention includes the following steps:

S201. A base station notifies a User Equipment (UE) of a need to feed back a PMI and a feedback mode for feeding back the PMI;

S202. The base station receives a jointly encoded information value of an RI and a first PMI fed back from the UE; and

S203. The base station determines the RI and a codebook index $i_1$, based on the jointly encoded information value of the RI and the first PMI, according to a preset correspondence relationship between the jointly encoded information value of the RI and the first PMI, the RI and the codebook index.

Preferably the base station notifies the UE of the need to feed back the PMI and the feedback mode for feeding back the PMI as follows:

The base station sends control signaling including information indicating a need to feed back Channel State Information (CSI) and a feedback mode for feeding back the CSI to notify in the control signaling the UE of the need to feed back the PMI and the feedback mode for feeding back the PMI.

Preferably the correspondence relationship in the step S203 includes:

The jointly encoded information value $I_{RI/PMI1}$ of the RI and the first PMI ranges from 0 to 7 at RI=1, and the codebook index $i_1$ and $I_{RI/PMI1}$ satisfy $i_1 = 2 I_{RI/PMI1}$;

The jointly encoded information value $I_{RI/PMI1}$ of the RI and the first PMI ranges from

8 to 15 at RI=2, and the codebook index $i_1$ and $I_{RI/PMI1}$ satisfy $i_1 = 2(I_{RI/PMI1}-8)$;

The jointly encoded information value $I_{RI/PMI1}$ of the RI and the first PMI ranges from 16 to 17 at RI=3, and the codebook index $i_1$ and $I_{RI/PMI1}$ satisfy $i_1 = 2(II_{RI/PMI1}-16)$;

The jointly encoded information value $I_{RI/PMI1}$ of the RI and the first PMI ranges from 18 to 19 at RI=4, and the codebook index $i_1$ and $I_{RI/PMI1}$ satisfy $i_1 = 2(I_{RI/PMI1}-18)$;

The jointly encoded information value $I_{RI/PMI1}$ of the RI and the first PMI ranges from 20 to 21 at RI=5, and the codebook index $i_1$ and $I_{RI/PMI1}$ satisfy $i_1 = 2(I_{RI/PMI1}-20)$;

The jointly encoded information value $I_{RI/PMI1}$ of the RI and the first PMI ranges from 22 to 23 at RI=6, and the codebook index $i_1$ and $I_{RI/PMI1}$ satisfy $i_1 = 2(I_{RI/PMI1}-22)$;

The jointly encoded information value $I_{RI/PMI1}$ of the RI and the first PMI ranges from 24 to 25 at RI=7, and the codebook index $i_1$ and $I_{RI/PMI1}$ satisfy $i_1 = 2(I_{RI/PMI1}-24)$; and

The jointly encoded information value $I_{RI/PMI1}$ of the RI and the first PMI is 26 at RI=8, and the codebook index $i_1$ is 0.

Preferably the table of the same correspondence relationship as in Table 1 above is set in the base station.

Specifically, for example:

The base station sends the control signaling including the information indicating the need to feed back the CSI and the feedback mode for feeding back the CSI and thereby notifies the UE of the need to feed back the PMI and the use of the submode 1 of the PUCCH feedback mode 1-1 as the feedback mode for feeding back the PMI.

The base station receives the jointly encoded information value of the RI and the first PMI fed back from the UE.

For example, if the jointly encoded information value of the RI and the first PMI is $I_{RI/PMI1} = 10$, then RI=2 is determined from Table 1, and the value of the codebook index $i_1$ is derived as 4 in $i_1 = 2(I_{RI/PMI1}-8)$.

Based upon the same inventive idea, an embodiment of the invention further provides an apparatus for feeding back Precoding Matrix Indicator (PMI) information, and since the feedback apparatus addresses the problem under a similar principle to the method of feeding back PMI information according to the embodiment of the invention in Fig.10, reference can be made to the implementation of the method for an implementation of the feedback apparatus, and a repeated description thereof will be omitted here.

Referring to Fig.12, an apparatus for feeding back Precoding Matrix Indicator (PMI) information according to an embodiment of the invention includes:

A first determination unit 11 is configured to determine a need to feed back a PMI and a feedback mode for feeding back the PMI;

A second determination unit 12 is configured to determine an RI and a precoding matrix in a set of compressed precoding matrixes and to determine a jointly encoded information value of the RI and a first PMI according to a preset correspondence relationship between the jointly encoded information value of the RI and the first PMI, the RI and a codebook index; and

A sending unit 13 is configured to send the determined jointly encoded information value of the RI and the first PMI to a base station in the determined feedback mode.

Preferably the first determination unit 11 is further configured to receive control signaling, sent from the base station, including information indicating a need to feed back Channel State Information (CSI) and a feedback mode for feeding back the CSI, and to determine from the control signaling the need to feed back the PMI and the use of the feedback mode for feeding back the PMI.

Based upon the same inventive idea, an embodiment of the invention further provides an apparatus for receiving Precoding Matrix Indicator (PMI) information, and since the feedback apparatus addresses the problem under a similar principle to the method of receiving PMI information according to the embodiment of the invention in Fig. 11, reference can be made to the implementation of the method for an implementation of the feedback apparatus, and a repeated description thereof will be omitted here.

Referring to Fig. 13, an apparatus for receiving Precoding Matrix Indicator (PMI) information according to an embodiment of the invention includes:

A notification unit 21 is configured to notify a User Equipment (UE) of a need to feed back a PMI and a feedback mode for feeding back the PMI;

A reception unit 22 is configured to receive a jointly encoded information value of an RI and a first PMI fed back from the UE; and

A determination unit 23 is configured to determine the RI and a codebook index, based on the jointly encoded information value of the RI and the first PMI, according to a preset correspondence relationship between the jointly encoded information value of the RI and the first PMI, the RI and the codebook index.

Preferably the notification unit 21 is further configured to send control signaling including information indicating a need to feed back Channel State Information (CSI) and a feedback mode for feeding back the CSI to notify in the control signaling the UE of the need to feed back the PMI and the feedback mode for feeding back the PMI.

The correspondence relationship preset in the apparatus for feeding back Precoding Matrix Indicator (PMI) information is the same as that in the apparatus for receiving Precoding Matrix Indicator (PMI) information and both of them can be the correspondence relationship as depicted in Table 1 above.

In summary, in the embodiment of the invention, a User Equipment (UE) determines a need to feed back a PMI and a feedback mode for feeding back the PMI; the UE determines an RI and a precoding matrix in a set of compressed precoding matrixes and determines a jointly encoded information value of the RI and a first PMI according to a preset correspondence relationship between the jointly encoded information value of the RI and the first PMI, the RI and a codebook index; and the UE sends the determined jointly encoded information value of the RI and the first PMI to a base station in the feedback mode to thereby feed back the PMI.

In the embodiment of the invention, a base station notifies a User Equipment (UE) of a need to feed back a PMI and a feedback mode for feeding back the PMI; the base station receives a jointly encoded information value of an RI and a first PMI fed back from the UE; and the base station determines the RI and a codebook index, based on the jointly encoded information value of the RI and the first PMI, according to a preset correspondence relationship between the jointly encoded information value of the RI and the first PMI, the RI and the codebook index to thereby receive the PMI.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

**Claims**

1. A method of feeding back Precoding Matrix Indicator (PMI) information, comprising:

   a User Equipment (UE) determining a need to feed back a PMI and a feedback mode for feeding back the PMI;
   the UE determining a Rank Indication (RI) and a precoding matrix in a set of compressed precoding matrixes and determining a jointly encoded information value of the RI and a first PMI according to a preset correspondence relationship between the jointly encoded information value of the RI and the first PMI, the RI and a codebook index; and
   the UE sending the determined jointly encoded information value of the RI and the first PMI to a base station in the feedback mode.

2. The method according to claim 1, wherein the UE determining the need to feed back the PMI and the feedback mode for feeding back the PMI comprises:

   the UE receiving control signaling, sent from the base station, including information indicating a need to feed back Channel State Information (CSI) and a feedback mode for feeding back the CSI, and determining from the control signaling the need to feed back the PMI and the feedback mode for feeding back the PMI.

3. The method according to claim 1 or 2, wherein the preset correspondence relationship comprises:

   for RI=1, the jointly encoded information value $I_{RI/PMI1}$ of the RI and the first PMI ranges from 0 to 7, and the codebook index $i_1$ and $I_{RI/PMI1}$ satisfy $I_{RI/PMI1}$;
   for RI=2, the jointly encoded information value $I_{RI/PMI1}$ of the RI and the first PMI ranges from 8 to 15, and the codebook index $i_1$ and $I_{RI/PMI1}$ satisfy $i_1 =2(I_{RI/PMI1}-8)$;
   for RI=3, the jointly encoded information value $I_{RI/PMI1}$ of the RI and the first PMI ranges from 16 to 17, and the codebook index $i_1$ and $I_{RI/PMI1}$ satisfy $i_1 =2(I_{RI/PMI1}-16)$;
   for RI=4, the jointly encoded information value $I_{RI/PMI1}$ of the RI and the first PMI ranges from 18 to 19, and the codebook index $i_1$ and $I_{RI/PMI1}$ satisfy $i_1 =2(I_{RI/PMI1}-18)$;
   for RI=5, the jointly encoded information value $I_{RI/PMI1}$ of the RI and the first PMI ranges from 20 to 21, and the codebook index $i_1$ and $I_{RI/PMI1}$ satisfy $i_1 =2(I_{RI/PMI1}-20)$;
   for RI=6, the jointly encoded information value $I_{RI/PMI1}$ of the RI and the first PMI ranges from 22 to 23, and the codebook index $i_1$ and $I_{RI/PMI1}$ satisfy $i_1 =2(I_{RI/PMI1}-22)$;
   for RI=7, the jointly encoded information value $I_{RI/PMI1}$ of the RI and the first PMI ranges from 24 to 25, and the codebook index $i_1$ and $I_{RI/PMI1}$ satisfy $i_1 =2(I_{RI/PMI1}-24)$; and
   for RI=8, the jointly encoded information value $I_{RI/PMI1}$ of the RI and the first PMI is 26, and the codebook index $i_1$ is 0.

4. The method according to claim 3, wherein the preset correspondence relationship is a correspondence relationship as depicted in a table below:

| $I_{RI/PMI1}$ | RI | $i_1$ |
|---|---|---|
| 0-7 | 1 | $2^{I_{RI/PMI1}}$ |

(continued)

| $I_{RI/PMI1}$ | RI | $i_1$ |
|---|---|---|
| 8-15 | 2 | $2(I_{RI/PMI1}-8)$ |
| 16-17 | 3 | $2(I_{RI/PMI1}-16)$ |
| 18-19 | 4 | $2(I_{RI/PMI1}-18)$ |
| 20-21 | 5 | $2(I_{RI/PMI1}-20)$ |
| 22-23 | 6 | $2(I_{RI/PMI1}-22)$ |
| 24-25 | 7 | $2(I_{RI/PMI1}-24)$ |
| 26 | 8 | 0 |
| 27-31 | Reserved | NA |

wherein $I_{RI/PMI1}$ is the jointly encoded information value of the RI and the first PMI, $i_1$ is the codebook index, and NA represents no significance.

5. A method of receiving Precoding Matrix Indicator (PMI) information, comprising:

a base station notifying a User Equipment (UE) of a need to feed back a PMI and a feedback mode for feeding back the PMI;
the base station receiving a jointly encoded information value of a Rank Indication (RI) and a first PMI fed back from the UE; and
the base station determining the RI and a codebook index, based on the jointly encoded information value of the RI and the first PMI, according to a preset correspondence relationship between the jointly encoded information value of the RI and the first PMI, the RI and the codebook index.

6. The method according to claim 5, wherein the base station notifying the UE of the need to feed back the PMI and the feedback mode for feeding back the PMI comprises:

the base station sending control signaling including information indicating a need to feed back Channel State Information (CSI) and a feedback mode for feeding back the CSI to notify in the control signaling the UE of the need to feed back the PMI and the feedback mode for feeding back the PMI.

7. The method according to claim 5 or 6, wherein the preset correspondence relationship comprises:

the jointly encoded information value $I_{RI/PMI1}$ of the RI and the first PMI ranges from 0 to 7 at RI=1, and the codebook index $i_1$ and $I_{RI/PMI1}$ satisfy $i_1 = 2I_{RI/PMI1}$;
the jointly encoded information value $I_{RI/PMI1}$ of the RI and the first PMI ranges from 8 to 15 at RI=2, and the codebook index $i_1$ and $I_{RI/PMI1}$ satisfy $i_1 = 2(I_{RI/PMI1}-8)$;
the jointly encoded information value $I_{RI/PMI1}$ of the RI and the first PMI ranges from 16 to 17 at RI=3, and the codebook index $i_1$ and $I_{RI/PMI1}$ satisfy $i_1 = 2(I_{RI/PMI1}-16)$;
the jointly encoded information value $I_{RI/PMI1}$ of the RI and the first PMI ranges from 18 to 19 at RI=4, and the codebook index $i_1$ and $I_{RI/PMI1}$ satisfy $i_1 = 2(I_{RI/PMI1}-18)$;

the jointly encoded information value $I_{RI/PMI1}$ of the RI and the first PMI ranges from 20 to 21 at RI=5, and the codebook index $i_1$ and $I_{RI/PMI1}$ satisfy $i_1 = 2(I_{RI/PMI1}-20)$;

the jointly encoded information value $I_{RI/PMI1}$ of the RI and the first PMI ranges from 22 to 23 at RI=6, and the codebook index $i_1$ and $I_{RI/PMI1}$ satisfy $i_1 = 2(I_{RI/PMI1}-22)$;

the jointly encoded information value $I_{RI/PMI1}$ of the RI and the first PMI ranges from 24 to 25 at RI=7, and the codebook index $i_1$ and $I_{RI/PMI1}$ satisfy $i_1 = 2(I_{RI/PMI1}-24)$; and

the jointly encoded information value $I_{RI/PMI1}$ of the RI and the first PMI is 26 at RI=8, and the codebook index $i_1$ is 0.

8. The method according to claim 7, wherein the preset correspondence relationship is a correspondence relationship as depicted in a table below:

| $I_{RI/PMI1}$ | RI | $i_1$ |
|---|---|---|
| 0-7 | 1 | $2^{I_{RI/PMI1}}$ |
| 8-15 | 2 | $2(I_{RI/PMI1}-8)$ |
| 16-17 | 3 | $2(I_{RI/PMI1}-16)$ |
| 18-19 | 4 | $2(I_{RI/PMI1}-18)$ |
| 20-21 | 5 | $2(I_{RI/PMI1}-20)$ |
| 22-23 | 6 | $2(I_{RI/PMI1}-22)$ |
| 24-25 | 7 | $2(I_{RI/PMI1}-24)$ |
| 26 | 8 | 0 |
| 27-31 | Reserved | NA |

wherein $I_{RI/PMI1}$ is the jointly encoded information value of the RI and the first PMI, $i_1$ the codebook index, and NA represents no significance.

9. An apparatus for feeding back Precoding Matrix Indicator (PMI) information, comprising:

a first determination unit configured to determine a need to feed back a PMI and a feedback mode for feeding back the PMI;

a second determination unit configured to determine a Rank Indication (RI) and a precoding matrix in a set of compressed precoding matrixes and to determine a jointly encoded information value of the RI and a first PMI according to a preset correspondence relationship between the jointly encoded information value of the RI and the first PMI, the RI and a codebook index; and

a sending unit configured to send the determined jointly encoded information value of the RI and the first PMI to a base station in the feedback mode.

10. The apparatus according to claim 9, wherein the first determination unit is further configured:

to receive control signaling, sent from the base station, including information indicating a need to feed back Channel State Information (CSI) and a feedback mode for feeding back the CSI, and to determine from the control signaling the need to feed back the PMI and the feedback mode for feeding back the PMI.

11. The apparatus according to claim 9 or 10, wherein the preset correspondence relationship comprises:

for RI=1, the jointly encoded information value $I_{RI/PMI1}$ of the RI and the first PMI ranges from 0 to 7, and the codebook index $i_1$ and $I_{RI/PMI1}$ satisfy $i_1 = 2I_{RI/PMI1}$;
for RI=2, the jointly encoded information value $I_{RI/PMI1}$ of the RI and the first PMI ranges from 8 to 15, and the codebook index $i_1$ and $I_{RI/PMI1}$ satisfy $i_1 = 2(I_{RI/PMI1}-8)$;
for RI=3, the jointly encoded information value $I_{RI/PMI1}$ of the RI and the first PMI ranges from 16 to 17, and the codebook index $i_1$ and $I_{RI/PMI1}$ satisfy $i_1 = 2(I_{RI/PMI1}-16)$;
for RI=4, the jointly encoded information value $I_{RI/PMI1}$ of the RI and the first PMI ranges from 18 to 19, and the codebook index $i_1$ and $I_{RI/PMI1}$ satisfy $i_1 = 2(I_{RI/PMI1}-18)$;
for RI=5, the jointly encoded information value $I_{RI/PMI1}$ of the RI and the first PMI ranges from 20 to 21, and the codebook index $i_1$ and $I_{RI/PMI1}$ satisfy $i_1 = 2(I_{RI/PMI1}-20)$;
for RI=6, the jointly encoded information value $I_{RI/PMI1}$ of the RI and the first PMI ranges from 22 to 23, and the codebook index $i_1$ and $I_{RI/PMI1}$ satisfy $i_1 = 2(I_{RI/PMI1}-22)$;
for RI=7, the jointly encoded information value $I_{RI/PMI1}$ of the RI and the first PMI ranges from 24 to 25, and the codebook index $i_1$ and $I_{RI/PMI1}$ satisfy $i_1 = 2(I_{RI/PMI1}-24)$; and
for RI=8, the jointly encoded information value $I_{RI/PMI1}$ of the RI and the first PMI is 26, and the codebook index $i_1$ is 0.

12. The apparatus according to claim 11, wherein the preset correspondence relationship is a correspondence relationship as depicted in a table below:

| $I_{RI/PMI1}$ | RI | $i_1$ |
|---|---|---|
| 0-7 | 1 | $2^{I_{RI/PMI1}}$ |
| 8-15 | 2 | $2(I_{RI/PMI1}-8)$ |
| 16-17 | 3 | $2(I_{RI/PMI1}-16)$ |
| 18-19 | 4 | $2(I_{RI/PMI1}-18)$ |
| 20-21 | 5 | $2(I_{RI/PMI1}-20)$ |
| 22-23 | 6 | $2(I_{RI/PMI1}-22)$ |
| 24-25 | 7 | $2(I_{RI/PMI1}-24)$ |
| 26 | 8 | 0 |
| 27-31 | Reserved | NA |

wherein $I_{RI/PMI1}$ is the jointly encoded information value of the RI and the first PMI, $i_1$ is the codebook index, and NA represents no significance.

**13.** An apparatus for receiving Precoding Matrix Indicator (PMI) information, comprising:

a notification unit configured to notify a User Equipment (UE) of a need to feed back a PMI and a feedback mode for feeding back the PMI;
a reception unit configured to receive a jointly encoded information value of a Rank Indication (RI) and a first PMI fed back from the UE; and
a determination unit configured to determine the RI and a codebook index, based on the jointly encoded information value of the RI and the first PMI, according to a preset correspondence relationship between the jointly encoded information value of the RI and the first PMI, the RI and the codebook index.

**14.** The apparatus according to claim 13, wherein the notification unit is further configured:

to send control signaling including information indicating a need to feed back Channel State Information (CSI) and a feedback mode for feeding back the CSI to notify in the control signaling the UE of the need to feed back the PMI and the feedback mode for feeding back the PMI.

**15.** The apparatus according to claim 13 or 14, wherein the preset correspondence relationship comprises:

the jointly encoded information value $I_{RI/PMI1}$ of the RI and the first PMI ranges from 0 to 7 at RI=1, and the codebook index $i_1$ and $I_{RI/PMI1}$ satisfy $i_1 = 2I_{RI/PMI1}$;
the jointly encoded information value $I_{RI/PMI1}$ of the RI and the first PMI ranges from 8 to 15 at RI=2, and the codebook index $i_1$ and $I_{RI/PMI1}$ satisfy $i_1 = 2(I_{RI/PMI1}-8)$;
the jointly encoded information value $I_{RI/PMI1}$ of the RI and the first PMI ranges from 16 to 17 at RI=3, and the codebook index $i_1$ and $I_{RI/PMI1}$ satisfy $I_{RI/PMI1}-16)$;
the jointly encoded information value $I_{RI/PMI1}$ of the RI and the first PMI ranges from 18 to 19 at RI=4, and the codebook index $i_1$ and $I_{RI/PMI1}$ satisfy $i_1 = 2(I_{RI/PMI1}-18)$;
the jointly encoded information value $I_{RI/PMI1}$ of the RI and the first PMI ranges from 20 to 21 at RI=5, and the codebook index $i_1$ and $I_{RI/PMI1}$ satisfy $i_1 = 2(I_{RI/PMI1}-20)$;
the jointly encoded information value $I_{RI/PMI1}$ of the RI and the first PMI ranges from 22 to 23 at RI=6, and the codebook index $i_1$ and $I_{RI/PMI1}$ satisfy $i_1 = 2(I_{RI/PMI1}-22)$;
the jointly encoded information value $I_{RI/PMI1}$ of the RI and the first PMI ranges from 24 to 25 at RI=7, and the codebook index $i_1$ and $I_{RI/PMI1}$ satisfy $i_1 = 2(I_{RI/PMI1}-24)$; and
the jointly encoded information value $I_{RI/PMI1}$ of the RI and the first PMI is 26 at RI=8, and the codebook index $i_1$ is 0.

**16.** The apparatus according to claim 15, wherein the preset correspondence relationship is a correspondence relationship as depicted in a table below:

| $I_{RI/PMI1}$ | RI | $i_1$ |
|---|---|---|
| 0-7 | 1 | $2^{I_{RI/PMI1}}$ |
| 8-15 | 2 | $2(^{I_{RI/PMI1}}-8)$ |
| 16-17 | 3 | $2(^{I_{RI/PMI1}}-16)$ |
| 18-19 | 4 | $2(^{I_{RI/PMI1}}-18)$ |
| 20-21 | 5 | $2(^{I_{RI/PMI1}}-20)$ |

(continued)

| $I_{RI/PMI1}$ | RI | $i_1$ |
|---|---|---|
| 22-23 | 6 | $2(^{I_{RI/PMI1}}-22)$ |
| 24-25 | 7 | $2(^{I_{RI/PMI1}}-24)$ |
| 26 | 8 | 0 |
| 27-31 | Reserved | NA |

wherein $I_{RI/PMI1}$ is the jointly encoded information value of the RI and the first PMI, $i_1$ the codebook index, and NA represents no significance.

| $i_1$ | $i_2$ | | | |
|---|---|---|---|---|
| | **0** | **1** | **2** | **3** |
| $0-15$ | $W_{2i_1,0}^{(1)}$ | $W_{2i_1,1}^{(1)}$ | $W_{2i_1,2}^{(1)}$ | $W_{2i_1,3}^{(1)}$ |
| $i_1$ | $i_2$ | | | |
| | **4** | **5** | **6** | **7** |
| $0-15$ | $W_{2i_1+1,0}^{(1)}$ | $W_{2i_1+1,1}^{(1)}$ | $W_{2i_1+1,2}^{(1)}$ | $W_{2i_1+1,3}^{(1)}$ |
| $i_1$ | $i_2$ | | | |
| | **8** | **9** | **10** | **11** |
| $0-15$ | $W_{2i_1+2,0}^{(1)}$ | $W_{2i_1+2,1}^{(1)}$ | $W_{2i_1+2,2}^{(1)}$ | $W_{2i_1+2,3}^{(1)}$ |
| $i_1$ | $i_2$ | | | |
| | **12** | **13** | **14** | **15** |
| $0-15$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |
| Where $W_{m,n}^{(1)} = \dfrac{1}{\sqrt{8}}\begin{bmatrix} v_m \\ \varphi_n v_m \end{bmatrix}$ | | | | |

Fig.1

| $i_1$ | $i_2$ | | | |
|---|---|---|---|---|
| | **0** | **1** | **2** | **3** |
| $0-15$ | $W_{2i_1,2i_1,0}^{(2)}$ | $W_{2i_1,2i_1,1}^{(2)}$ | $W_{2i_1+1,2i_1+1,0}^{(2)}$ | $W_{2i_1+1,2i_1+1,1}^{(2)}$ |
| $i_1$ | $i_2$ | | | |
| | **4** | **5** | **6** | **7** |
| $0-15$ | $W_{2i_1+2,2i_1+2,0}^{(2)}$ | $W_{2i_1+2,2i_1+2,1}^{(2)}$ | $W_{2i_1+3,2i_1+3,0}^{(2)}$ | $W_{2i_1+3,2i_1+3,1}^{(2)}$ |
| $i_1$ | $i_2$ | | | |
| | **8** | **9** | **10** | **11** |
| $0-15$ | $W_{2i_1,2i_1+1,0}^{(2)}$ | $W_{2i_1,2i_1+1,1}^{(2)}$ | $W_{2i_1+1,2i_1+2,0}^{(2)}$ | $W_{2i_1+1,2i_1+2,1}^{(2)}$ |
| $i_1$ | $i_2$ | | | |
| | **12** | **13** | **14** | **15** |
| $0-15$ | $W_{2i_1,2i_1+3,0}^{(2)}$ | $W_{2i_1,2i_1+3,1}^{(2)}$ | $W_{2i_1+1,2i_1+3,0}^{(2)}$ | $W_{2i_1+1,2i_1+3,1}^{(2)}$ |
| Where $W_{m,m',n}^{(2)} = \dfrac{1}{4}\begin{bmatrix} v_m & v_{m'} \\ \varphi_n v_m & -\varphi_n v_{m'} \end{bmatrix}$ | | | | |

Fig.2

| $i_1$ | $i_2$ | | | |
|---|---|---|---|---|
| | **0** | **1** | **2** | **3** |
| 0 - 3 | $W^{(3)}_{8i_1,8i_1,8i_1-8}$ | $W^{(3)}_{8i_1-8,8i_1,8i_1+8}$ | $\widetilde{W}^{(3)}_{8i_1,8i_1+8,8i_1-8}$ | $\widetilde{W}^{(3)}_{8i_1+8,8i_1,8i_1}$ |
| $i_1$ | $i_2$ | | | |
| | **4** | **5** | **6** | **7** |
| 0 - 3 | $W^{(3)}_{8i_1+2,8i_1+2,4i_1-10}$ | $W^{(3)}_{8i_1+10,8i_1+2,8i_1+10}$ | $\widetilde{W}^{(3)}_{8i_1+2,8i_1+10,8i_1-10}$ | $\widetilde{W}^{(3)}_{8i_1+10,8i_1+2,8i_1+2}$ |
| $i_1$ | $i_2$ | | | |
| | **8** | **9** | **10** | **11** |
| 0 - 3 | $W^{(3)}_{8i_1+4,8i_1+4,8i_1+12}$ | $W^{(3)}_{8i_1+12,8i_1+4,8i_1+12}$ | $\widetilde{W}^{(3)}_{8i_1+4,8i_1+12,8i_1-12}$ | $\widetilde{W}^{(3)}_{8i_1+12,8i_1+4,8i_1+4}$ |
| $i_1$ | $i_2$ | | | |
| | **12** | **13** | **14** | **15** |
| 0 - 3 | $W^{(3)}_{8i_1+6,8i_1+6,8i_1-14}$ | $W^{(3)}_{8i_1+14,8i_1-6,8i_1-14}$ | $\widetilde{W}^{(3)}_{8i_1-6,8i_1-14,8i_1+14}$ | $\widetilde{W}^{(3)}_{8i_1+14,8i_1+6,8i_1+6}$ |

$$\text{Where}\quad W^{(3)}_{m,m',m''}=\frac{1}{\sqrt{24}}\begin{bmatrix} v_m & v_{m'} & v_{m''} \\ v_m & -v_{m'} & -v_{m''} \end{bmatrix},\quad \widetilde{W}^{(3)}_{m,m',m''}=\frac{1}{\sqrt{24}}\begin{bmatrix} v_m & v_{m'} & v_{m''} \\ v_m & v_{m'} & -v_{m''} \end{bmatrix}$$

Fig.3

| $i_1$ | $i_2$ | | | |
|---|---|---|---|---|
| | **0** | **1** | **2** | **3** |
| 0 - 3 | $W^{(4)}_{8i_1,8i_1-8,0}$ | $W^{(4)}_{8i_1,8i_1+8,1}$ | $W^{(4)}_{8i_1+2,8i_1+10,0}$ | $W^{(4)}_{8i_1-2,8i_1+10,1}$ |
| $i_1$ | $i_2$ | | | |
| | **4** | **5** | **6** | **7** |
| 0 - 3 | $W^{(4)}_{8i_1+4,8i_1+12,0}$ | $W^{(4)}_{8i_1+4,8i_1+12,1}$ | $W^{(4)}_{8i_1+6,8i_1+14,0}$ | $W^{(4)}_{8i_1+6,8i_1+14,1}$ |

$$\text{Where}\quad W^{(4)}_{m,m',n}=\frac{1}{\sqrt{32}}\begin{bmatrix} v_m & v_{m'} & v_m & v_{m'} \\ \varphi_n v_m & \varphi_n v_{m'} & -\varphi_n v_m & -\varphi_n v_{m'} \end{bmatrix}$$

Fig.4

| $i_1$ | $i_2$ |
|---|---|
| | **0** |
| 0 - 3 | $W_{i_1}^{(5)} = \dfrac{1}{\sqrt{40}} \begin{bmatrix} v_{2i_1} & v_{2i_1} & v_{2i_1+8} & v_{2i_1+8} & v_{2i_1+16} \\ v_{2i_1} & -v_{2i_1} & v_{2i_1+8} & -v_{2i_1+8} & v_{2i_1+16} \end{bmatrix}$ |

**Fig.5**

| $i_1$ | $i_2$ |
|---|---|
| | **0** |
| 0 - 3 | $W_{i_1}^{(6)} = \dfrac{1}{\sqrt{48}} \begin{bmatrix} v_{2i_1} & v_{2i_1} & v_{2i_1-8} & v_{2i_1+8} & v_{2i_1+16} & v_{2i_1-16} \\ v_{2i_1} & -v_{2i_1} & v_{2i_1-8} & -v_{2i_1-8} & v_{2i_1+16} & -v_{2i_1+16} \end{bmatrix}$ |

**Fig.6**

| $i_1$ | $i_2$ |
|---|---|
| | **0** |
| 0 - 3 | $W_{i_1}^{(7)} = \dfrac{1}{\sqrt{56}} \begin{bmatrix} v_{2i_1} & v_{2i_1} & v_{2i_1+8} & v_{2i_1-8} & v_{2i_1-16} & v_{2i_1+16} & v_{2i_1+24} \\ v_{2i_1} & -v_{2i_1} & v_{2i_1+8} & -v_{2i_1+8} & v_{2i_1-16} & -v_{2i_1-16} & v_{2i_1+24} \end{bmatrix}$ |

**Fig.7**

| $i_1$ | $i_2$ |
|---|---|
| | **0** |
| 0 | $W_{i_1}^{(8)} = \dfrac{1}{8} \begin{bmatrix} v_{2i_1} & v_{2i_1} & v_{2i_1+8} & v_{2i_1-8} & v_{2i_1-16} & v_{2i_1+16} & v_{2i_1+24} & v_{2i_1+24} \\ v_{2i_1} & -v_{2i_1} & v_{2i_1+8} & -v_{2i_1+8} & v_{2i_1-16} & -v_{2i_1+16} & v_{2i_1+24} & -v_{2i_1-24} \end{bmatrix}$ |

**Fig.8**

| Assumption | RI | $i_1$ Value |
|---|---|---|
| 0-7 | 1 | {0,2,4,6,8,10,12,14} |
| 8-15 | 2 | {0,2,4,6,8,10,12,14} |
| 16-17 | 3 | {0,2} |
| 18-19 | 4 | {0,2} |
| 20-21 | 5 | {0,2} |
| 22-23 | 6 | {0,2} |
| 24-25 | 7 | {0,2} |
| 26 | 8 | {0} |
| 27-31 | Reserved | NA |

Fig.9

| A User Equipment (UE) determines a need to feed back a PMI and a feedback mode for feeding back the PMI | S101 |

| The UE determines a data layer Rank Indication (RI) and a precoding matrix in a set of compressed precoding matrixes and determines a jointly encoded information value of the RI and a first PMI according to a preset correspondence relationship between the jointly encoded information value of the RI and the first PMI, the RI and a codebook index | S102 |

| The UE sends the determined jointly encoded information value of the RI and the first PMI to a base station in the feedback mode | S103 |

Fig.10

A base station notifies a User Equipment (UE) of a need to feed back a PMI and a feedback mode for feeding back the PMI          S201

The base station receives a jointly encoded information value of an RI and a first PMI fed back from the UE          S202

The base station determines the RI and a codebook index, based on the jointly encoded information value of the RI and the first PMI, according to a preset correspondence relationship between the jointly encoded information value of the RI and the first PMI, the RI and the codebook index          S203

Fig.11

First determination unit          11

Second determination unit          12

Sending unit          13

Fig.12

Fig.13

<h1 style="text-align:center">INTERNATIONAL SEARCH REPORT</h1>

| International application No. |
|---|
| PCT/CN2012/077833 |

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT, CNKI, VEN: precoding matrix, indicator, index, PMI, rank indicator, RI, fe?dback, report, first, 1, joint, combined, coding, coded

**C. DOCUMENTS CONSIDERED TO BE RELEVANT**

| Category* | Citation of document, with indication, where appropriate, of the relevant passages | Relevant to claim No. |
|---|---|---|
| PX | CN 102368698 A (INST TELECOM SCI&TECHNOLOGY MIN O) 07 March 2012 (07.03.2012) claims 1-16 | 1-16 |
| Y | CN 102082639 A (DATANG MOBILE COMMUNICATIONS EQUIP CO) 01 June 2011 (01.06.2011) claims 1, 9, 12, 20 | 1-2, 5-6, 9-10, 13-14 |
| A | The same as above | 3-4, 7-8, 11-12, 15-16 |
| Y | CN 101969367 A (ZTE CORP) 09 February 2011 (09.02.2011) description, paragraphs [0057]-[0116] | 1-2, 5-6, 9-10, 13-14 |
| A | The same as above | 3-4, 7-8, 11-12, 15-16 |
| A | WO 2011122919 A2 (LG ELECTRONICS INC.) 06 October. 2011 (06.10.2011) the whole document | 1-16 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 September 2012 (14.09.2012) | 04 October 2012 (04.10.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>ZHENG, Chunyu<br><br>Telephone No. (86-10)62411300 |

Form PCT/ISA/210 (second sheet) (July 2009)

**INTERNATIONAL SEARCH REPORT**
**Information on patent family members**

International application No.

PCT/CN2012/077833

| Patent Documents referred in the Report | Publication Date | Patent Family | Publication Date |
|---|---|---|---|
| CN 102368698 A | 07.03.2012 | None | |
| CN 102082639 A | 01.06.2011 | WO 2012062199 A1 | 18.05.2012 |
| CN 101969367 A | 09.02.2011 | WO2012041103 A1 | 05.04.2012 |
| WO 2011122919 A2 | 06.10.2011 | WO2011122919 A3 | 08.03.2012 |
| | | KR 20110111250 A | 10.10.2011 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110355806